# FASCICULE DE BREVET EUROPEEN

(11) **EP 0 693 995 B1**
(45) Date de publication et mention de la délivrance du brevet: **01.04.1998**
(21) Numéro de dépôt: 95910592.5
(22) Date de dépôt: 23.02.1995
(51) Int. Cl.: B60G 17/015, B60T 13/14

(54) **DISPOSITIF DE TRANSMISSION D'ENERGIE DE COMMANDE MECANIQUE**
VORRICHTUNG ZUM ÜBERTRAGEN VON MECHANISCHER STELLENERGIE
MECHANICALLY CONTROLLED POWER TRANSMISSION DEVICE

(30) Priorité: 24.02.1994 FR 9402128
(43) Date de publication de la demande: 31.01.1996
(73) Titulaire: AUTOMOBILES PEUGEOT, 75116 Paris (FR); AUTOMOBILES CITROEN, 92200 Neuilly-sur-Seine (FR)
(72) Inventeur: DORE, Jacques, F-92700 Colombes (FR); EDWIGE, François, F-92800 Puteaux (FR)
(74) Mandataire: Robert, Jean-François
(86) Numéro de dépôt international: FR9500217
(87) Numéro de publication internationale: WO9523075

(56) Documents cités:
- DE-B- 1 180 629
- FR-A- 2 390 320
- GB-A- 1 367 320
- US-A- 4 784 041

## Description

L'invention concerne un dispositif de transmission d'énergie de commande mécanique, notamment pour des applications dans le domaine automobile comme le contrôle de la pression de freinage dans un frein ou la correction rapide d'une suspension hydropneumatique.

Parmi les nombreuses solutions de transmission d'énergie de commande mécanique existantes, les systèmes hydrauliques tels que les servo-valves hydrauliques paraissent les mieux adaptés pour être embarqués dans des véhicules ou autres matériels mobiles car ils sont peu coûteux et peuvent s'adapter facilement et rapidement aux exigences de nouvelles conditions techniques ou économiques.

Une servo-valve hydraulique peut être définie comme l'interface entre un dispositif électrique ou électronique fournissant un signal de commande, et un dispositif hydraulique qui doit fournir une réponse fonction du signal électrique.

Les caractéristiques demandées à une servo-valve hydraulique sont les suivantes:
- Elle doit pouvoir être utilisée pour réaliser des asservissements de toute nature, par exemple:
   . asservissement d'une pression, dans une commande de freinage par exemple,
   . asservissement en déplacement, par exemple de la position d'un vérin hydraulique,
   . asservissement en débit, par exemple pour des corrections rapides d'une suspension hydropneumatique d'un véhicule.
- La servo-valve doit avoir une bande passante élevée de façon à permettre une réponse rapide et stable de l'asservissement, indépendamment du débit hydraulique demandé.
- La servo-valve doit être compatible avec l'environnement automobile par:
   . un faible prix de revient,
   . un fonctionnement possible dans une large plage de températures,
   . une faible sensibilité aux impuretés ne nécessitant pas de précautions importantes pour la mise en service et la filtration du fluide hydraulique,
   . une très faible consommation électrique,
   . une consommation hydraulique propre pratiquement nulle en toutes circonstances,
   . son insensibilité aux vibrations et aux accélérations.

On connaît une servo-valve répondant à toutes ces caractéristiques constituée par un actionneur rotatif tel qu'un moteur électrique rotatif de faible inertie, piloté en position et relié par des moyens de liaison mécaniques à un organe mécanique tel qu'un distributeur hydraulique à tiroir linéaire, le moteur étant équipé d'un ressort de rappel dans sa position initiale.

Un tel dispositif est bien adapté pour être embarqué sur un véhicule car le moteur électrique rotatif est insensible aux vibrations et aux accélérations qui n'ont aucun effet sur sa position angulaire, ce qui n'est pas le cas d'un moteur linéaire dont la masse métallique peut être déplacée par effet d'inertie. Quant au distributeur hydraulique à tiroir linéaire, il est déjà largement utilisé dans l'industrie automobile car il est peu coûteux, peu sensible aux impuretés et la très faible masse du tiroir lui-même fait que les accélérations suivant son axe ne créent que de très faibles forces.

Cependant, ce dispositif connu présente quelques inconvénients dûs à la présence inévitable de jeux dans la liaison entre l'actionneur et le tiroir. Il s'ensuit une certaine imprécision sur la position de ce dernier et une usure prématurée des pièces. De plus, en cas de rupture dans les liaisons mécaniques, le tiroir hydraulique peut soit rester dans sa position, qui n'est pas forcément celle correspondant à la plus grande sécurité de conduite du véhicule en cas de panne du système hydraulique, soit dériver de manière incontrôlée.

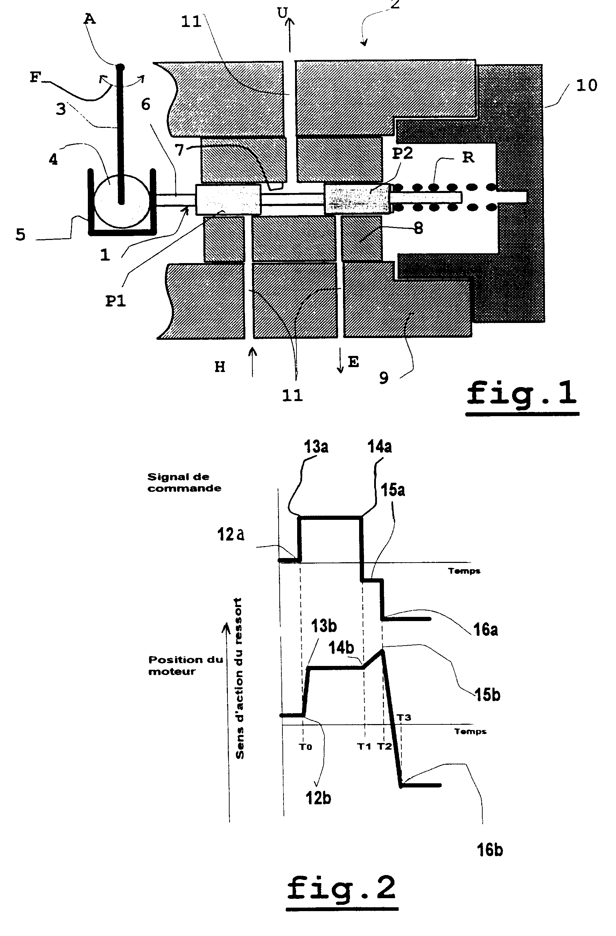

Pour pallier cet inconvénient, on peut prévoir un ressort de rappel agissant sur une extrémité du tiroir, comme cela est représenté sur la figure 1.

La servo-valve électro-hydraulique illustrée sur cette figure se compose essentiellement d'un moteur électrique rotatif (non représenté) d'axe A pouvant tourner d'un angle limité autour d'une position moyenne, comme cela est indiqué par la flèche F. Ce moteur actionne le tiroir 1 d'un distributeur hydraulique 2, par exemple par l'intermédiaire d'un levier 3 dont une extrémité est liée à l'axe A et dont l'autre porte une rotule 4 reçue dans une chape 5 fixée à une extrémité du tiroir 1.

Ce dernier se compose d'une tige 6 munie de deux pavés P1 et P2 coulissant dans un alésage 7 d'une chemise 8 elle-même logée dans un corps ou boîtier 9, une pièce 10 en forme de bouchon ou d'entretoise solidaire du boîtier 9 assurant l'étanchéité du côté opposé à la chape 5.

Les pavés P1 et P2 sont aptes à obturer ou dégager des orifices 11 ménagés dans la chemise 8 et le boîtier 9 et débouchant dans l'alésage 7, permettant ainsi d'établir ou d'interrompre des communications entre une utilisation U (c'est-à-dire l'organe hydraulique commandé) et soit une source de haute pression H, soit un échappement E. Un ressort R, par exemple un ressort hélicoïdal monté sur une extrémité du tiroir 1 et interposé entre le pavé P2 et la pièce 10, assure le rattrapage des jeux mécaniques de la liaison et pousse le tiroir 1 dans une position prédéterminée en cas de panne du moteur ou de rupture de la liaison: on voit que, dans cet exemple, il s'agit d'une position pour laquelle l'utilisation U est mise en communication avec la source de haute pression H. Bien entendu, l'utilisation U pourrait être mise en communication avec l'échappement E par une simple modification du circuit hydraulique (permutation de H et E par exemple).

Or, il est des cas où il n'est pas souhaitable qu'une telle communication avec la source de haute pression ou avec l'échappement soit établie en cas d'incident.

D'autre part, dans la solution décrite ci-dessus, l'effort du ressort s'exerçant en permanence et donc dans la position centrale du tiroir, le moteur électrique doit fournir un couple permanent pour maintenir cette position, qui est d'ailleurs statistiquement la position la plus fréquente du tiroir, ce qui entraîne consommation électrique et échauffement inutiles.

Cette disposition entraîne également, dans certains cas, une augmentation du temps de mise en position du moteur à sa valeur de consigne. La figure 2 indique en fonction du temps respectivement le signal de commande de position du moteur électrique et la position réelle du moteur. Le sens d'action du ressort R sur la position du moteur est également indiqué. Partant d'un signal donné, donc d'une position donnée, la commande, au temps T0, passe de la valeur 12a à 13a, ce qui fait passer le moteur de la position 12b à 13b, le retard entre les points 13b et 13a étant dû au temps d'établissement du courant dans le moteur et aux inerties mécaniques.

Lorsque, au temps T1, point 14a, on désire faire passer le signal d'une valeur positive à une valeur négative 16a, il est nécessaire, pour éviter un court-circuit dans les étages de puissance de la commande électronique du moteur, de respecter un court palier à courant nul 15a du temps T1 au temps T2. Pendant ce temps, le moteur se sera déplacé jusqu'au point 15b sous l'effet du ressort, dans un sens inverse de celui désiré. Il arrivera donc à son point de consigne 16b au temps T3 avec d'autant plus de retard par rapport au temps T2 correspondant au point 16a d'émission du signal de commande.

Aussi, l'invention a pour but d'éliminer ces inconvénients en proposant un dispositif de transmission d'énergie de commande mécanique, comprenant, de manière connue:
- un organe mécanique tel qu'un tiroir hydraulique apte à établir ou non des communications entre au moins une utilisation et soit une source de haute pression, soit un échappement;
- un actionneur ou moteur rotatif relié au tiroir par des moyens de liaison afin de lui transmettre un mouvement linéaire; et
- des moyens de rappel du tiroir dans une position de sécurité prédéterminée comprenant deux ressorts ou analogues agissant sur le tiroir en sens opposés.

Le document US-A-4 784 041 décrit un dispositif de ce type.

Selon la principale caractéristique du dispositif objet de l'invention, les ressorts sont précontraints et séparés l'un de l'autre de sorte que l'un exerce seul le rappel lorsque le tiroir se déplace dans un sens à partir de ladite position de sécurité et l'autre exerce seul le rappel lorsque le tiroir se déplace dans l'autre sens a partir de cette position;
- les ressorts ont même raideur;
- les ressorts ont des raideurs différentes;
- ladite position de sécurité prédéterminée n'est pas une position extrême de la course possible du tiroir et est de préférence une position dans laquelle aucune communication n'est établie;
- les ressorts sont situés de part et d'autre du tiroir;
- chaque ressort est interposé entre deux rondelles aptes à coulisser sur une tige prolongeant le tiroir et disposée colinéairement à celui-ci;
- le mouvement de chaque rondelle est limité par une butée prévue sur la tige;
- le tiroir comprenant une tige munie de pavés coulissant dans un alésage ménagé dans une chemise afin d'obturer ou dégager des orifices pour établir ou supprimer lesdites communications, l'une des butées est constituée par un jonc d'arrêt et l'autre par un pavé d'extrémité du tiroir;
- la rondelle située du côté du pavé a des dimensions suffisantes pour venir en butée contre la face d'extrémité correspondante de la chemise dans laquelle coulisse le tiroir lorsque le pavé pénètre dans l'alésage;
- en position neutre du tiroir, la somme des jeux entre les rondelles situées du côté des pavés d'extrémité et les faces correspondantes de la chemise est inférieure ou égale à la course morte du tiroir;
- les ressorts sont du même côté du tiroir;
- les deux ressorts sont montés sur une même tige prolongeant le tiroir d'un côté de celui-ci et disposée colinéairement à ce tiroir, chaque ressort étant interposé entre deux rondelles coulissant sur cette tige;
- le mouvement de chaque rondelle est limité par une butée prévue sur la tige;
- le tiroir comprenant une tige munie de pavés coulissant dans un alésage ménagé dans une chemise afin d'obturer ou de dégager des orifices pour établir ou supprimer lesdites communications, les butées sont constituées, pour l'une des rondelles, par un pavé d'extrémité du tiroir et pour les autres par des joncs d'arrêt prévus sur la tige;
- les dimensions des rondelles sont telles qu'au cours des mouvements du tiroir, la plus proche dudit pavé puisse venir en butée contre la face d'extrémité correspondante de la chemise dans laquelle coulisse le tiroir et la plus éloignée contre une paroi d'un corps solidaire de la chemise;
- ladite paroi présente un dégagement dans lequel peut pénétrer l'extrémité correspondante de la tige;
- en position neutre du tiroir, la somme des jeux entre ladite face de la chemise et ladite paroi et les rondelles correspondantes est inférieure ou égale à la course morte du tiroir.

L'invention apparaîtra mieux à la lecture de la description qui va suivre, donnée uniquement à titre d'exemple, faite en référence aux dessins annexés dans lesquels:
- la figure 1 est une vue schématique en coupe d'une servo-valve hydraulique actionnée par un moteur rotatif avec un ressort de rappel agissant sur une extrémité du tiroir;
- la figure 2 est un graphe donnant l'évolution de la position du moteur en fonction de l'évolution du signal de commande pour le dispositif de la figure 1;
- la figure 3 est une vue semblable à la figure 1 illustrant un dispositif conforme à l'invention;
- la figure 4 est un graphe semblable à celui de la figure 2, mais pour le dispositif de la figure 3; et
- la figure 5 est une vue semblable à la figure 3 d'un autre mode de réalisation du dispositif objet de l'invention.

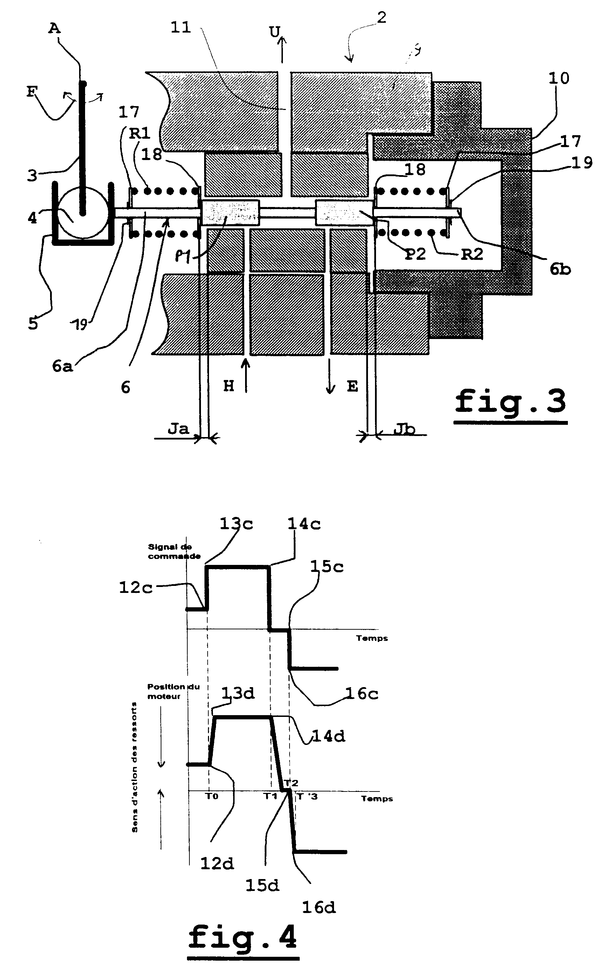

Si l'on se reporte à la figure 3, on voit que le dispositif objet de l'invention reprend l'essentiel du dispositif illustré à la figure 1 avec le moteur rotatif qui entraîne le tiroir 1 par l'intermédiaire du levier 3, de la rotule 4 et de la chape 5. On retrouve également la tige 6 portant les pavés P1 et P2 aptes à obturer ou dégager les orifices 11 débouchant dans l'alésage 7 de la chemise 8, ainsi que le corps 9 et le bouchon d'étanchéité 10.

La principale différence est que le ressort R est remplacé par deux ressorts R1 et R2 montés respectivement sur des prolongements 6a et 6b de la tige 6 se trouvant le premier entre la chape 5 et le pavé P1, et l'autre au-delà du pavé P2, du côté du bouchon 10.

Chaque ressort est précontraint entre deux rondelles 17 et 18 pouvant coulisser sur les parties 6a et 6b de la tige 6 et dont le mouvement est limité par des butées constituées par un jonc d'arrêt 19 pour la rondelle 17 et par le pavé d'extrémité correspondant pour la rondelle 18. Dans l'exemple décrit ici, il n'y a que deux pavés P1 et P2, mais, s'il y avait plus de deux pavés, c'est toujours sur les pavés d'extrémité que s'appuieraient les rondelles 18.

On remarquera encore que ces dernières ont des dimensions suffisantes pour venir en butée contre la face correspondante de la chemise 8 lorsque le pavé correspondant pénètre dans l'alésage 7 au cours des mouvements du tiroir: le ressort correspondant sera donc comprimé et assurera seul le rappel du tiroir en position neutre en cas d'incident, étant bien entendu, qu'en fonctionnement normal, le moteur agit à l'encontre des ressorts.

La position neutre est celle illustrée sur la figure 3. On voit qu'il s'agit d'une position sensiblement symétrique pour laquelle les pavés P1 et P2 obturent respectivement la haute pression H et l'échappement E: aucune communication n'est donc établie.

On remarquera qu'en position neutre, les pavés obturant des orifices s'étendent au-delà de chaque orifice de sorte qu'un déplacement minimal, appelé "recouvrement", est nécessaire avant que l'orifice considéré commence à être dégagé et qu'une communication soit établie. Cette disposition évite les fuites en position neutre, ce qui permet de régler la génération de pression au minimum possible, et permet de diminuer les coûts de fabrication puisque les tolérances peuvent être assez larges: en effet, des variations relativement importantes du recouvrement ne perturbent pas le fonctionnement du dispositif. La somme des recouvrements des pavés P1 et P2 est appelée "course morte" du tiroir et correspond à une distance parcourue par celui-ci pendant laquelle aucune communication n'est établie.

Dans le dispositif objet de l'invention, en position neutre, il est prévu des jeux Ja et Jb entre les rondelles 18 de chaque ressort et la face d'extrémité correspondante de la chemise 8, la somme des jeux Ja + Jb étant inférieure ou égale à la course morte du tiroir.

Avec ce dispositif, il n'y a donc pas besoin de couple au moteur électrique pour maintenir le tiroir dans sa position centrale, et donc aucune consommation électrique. En cas de coupure d'alimentation électrique du moteur, le tiroir reviendra automatiquement en position neutre.

La figure 4, relative au fonctionnement avec le dispositif de la figure 3 et sur laquelle on retrouve les mêmes références que sur la figure 2 mais avec les indices c et d au lieu de a et b, montre que, pour un signal de commande identique à celui de la figure 2, le temps de mise en position du moteur est réduit par rapport à la solution avec un seul ressort de rappel. En effet, à partir du temps T1, points 14c et 14d, où le courant est annulé dans le moteur, celui-ci est rappelé mécaniquement dans le sens désiré, et par conséquent le point 16d sera obtenu au temps T'3 plus petit que le temps T3 de la figure 2.

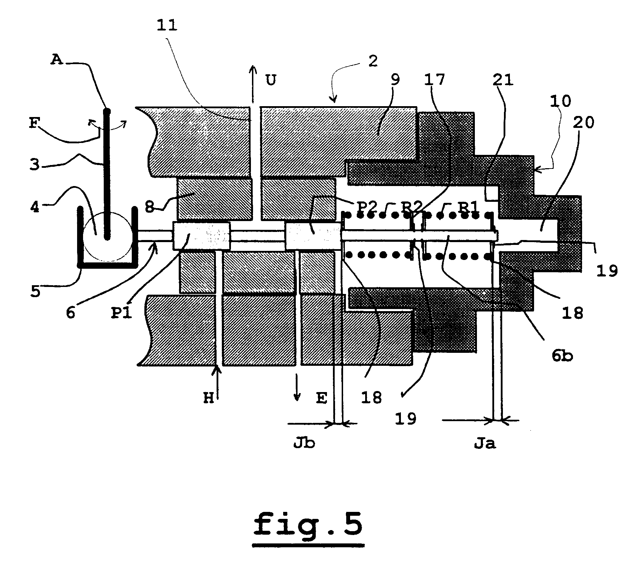

Le même résultat peut être obtenu avec le mode de réalisation de la figure 5 où les deux ressorts se trouvent du même côté du tiroir.

Si le ressort R2 est placé comme dans le cas de la figure 3, le ressort R1 se trouve sur la même partie 6b de la tige 6, au-delà du ressort R2. La pièce 10 a été modifiée en conséquence, puisque la partie 6b est plus longue, et elle présente un logement 20 apte à recevoir cette dernière lorsque le tiroir est déplacé vers la droite en regardant la figure 5. Dans ce cas, la rondelle 18 du ressort R1 vient en butée contre une paroi 21 de la pièce 10, le logement 20 étant ménagé dans cette paroi 21, et le ressort R1 se comprime, assurant ainsi seul le rappel du tiroir.

La position représentée en figure 5 est également la position neutre et l'on retrouve les jeux Ja et Jb mais, cette fois, le jeu Ja se trouve entre la rondelle 18 du ressort R1 et la paroi 21 du bouchon 10.

Le dispositif objet de l'invention présente de nombreux avantages puisqu'il permet d'obtenir les résultats suivants:
. Aucun effort n'est exercé sur le tiroir en position milieu, d'où économie de courant pour la commande du moteur électrique et diminution de son échauffement.
. Les ressorts de rappel agissent toujours dans le bon sens au moment de l'inversion du sens de rotation du moteur, d'où diminution du temps de réponse de la servo-valve.
. En dehors de la position centrale, les jeux mécaniques sont rattrapés, ce qui permet une bonne correspondance entre la position du moteur et celle du tiroir. Il faut remarquer que dans la position milieu du tiroir, les jeux mécaniques (d'ailleurs très faibles) ont le même effet que le recouvrement du tiroir en relation à la position angulaire du moteur. Ils sont sans incidence sur le fonctionnement de la servo-valve puisqu'aucune commande n'est réalisée dans cette plage de fonctionnement.
   De plus, les ressorts étant précontraints, celui qui exerce le rappel entre en action dès que le tiroir quitte sa position d'équilibre (sous réserve des jeux Ja et Jb) et, comme ils sont séparés, le fonctionnement de l'un n'est pas perturbé par l'autre, ce qui pourrait être le cas s'ils étaient en appui sur une rondelle ou plaque commune.
   Enfin, on peut utiliser des ressorts ayant même raideur ou des raideurs différentes, ce qui permet de choisir à volonté la position neutre de sécurité.

Il est bien entendu que l'invention ne se limite pas aux seuls modes de réalisation décrits et représentés, mais qu'on peut imaginer de nombreuses variantes sans sortir pour autant du cadre de l'invention, notamment en ce qui concerne le montage des ressorts et l'emplacement ou la forme des butées.

Par exemple, on remarquera que, dans tous les cas, les rondelles 17 restent au même endroit de la tige 6: on ne sortirait donc pas du cadre de l'invention en les remplaçant par des rondelles ou butées fixes, bien que le fait qu'elles soient coulissantes facilite le montage et le démontage de l'ensemble.

Enfin, si on a décrit l'invention dans le cadre d'un distributeur à trois voies avec un tiroir à deux pavés, elle s'applique à n'importe quel type de distributeur, même beaucoup plus complexe. De plus, l'invention n'est pas utilisable uniquement dans le domaine automobile, mais peut s'appliquer aussi bien à des matériels mobiles qu'à des machines fixes.

## Revendications

1. Dispositif de transmission d'énergie de commande mécanique, comprenant:
- un organe mécanique tel qu'un tiroir hydraulique (1) apte à établir ou non des communications entre au moins une utilisation (U) et soit une source de haute pression (H), soit un échappement (E);
- un actionneur rotatif ou moteur rotatif relié au tiroir (1) par des moyens de liaison afin de lui transmettre un mouvement linéaire; et
- des moyens de rappel du tiroir (1) dans une position de sécurité prédéterminée comprenant deux ressorts ou analogues (R1,R2) agissant sur le tiroir en sens opposés,
caractérisé en ce que les ressorts (R1,R2) sont précontraints indépendamment l'un de l'autre et séparés l'un de l'autre de sorte que l'un (R1) exerce seul la force de rappel lorsque le tiroir (1) se déplace dans un sens a partir de ladite position de sécurité et l'autre (R2) exerce seul la force de rappel lorsque le tiroir se déplace dans l'autre sens à partir de cette position.

2. Dispositif selon la revendication 1, caractérisé en ce que les ressorts (R1,R2) ont même raideur.

3. Dispositif selon la revendication 1, caractérisé en ce que les ressorts (R1,R2) ont des raideurs différentes.

4. Dispositif selon l'une quelconque des revendications 1 à 3, caractérisé en ce que ladite position de sécurité prédéterminée n'est pas une position extrême de la course possible du tiroir et est de préférence une position dans laquelle aucune communication n'est établie.

5. Dispositif selon l'une quelconque des revendications 1 à 4, caractérisé en ce que les ressorts (R1,R2) sont situés de part et d'autre du tiroir (1).

6. Dispositif selon la revendication 5, caractérisé en ce que chaque ressort est interposé entre deux rondelles (17,18) aptes à coulisser sur une tige (6a,6b) prolongeant le tiroir (1) et disposée colinéairement à celui-ci.

7. Dispositif selon la revendication 6, caracrérisé en ce que le mouvement de chaque rondelle (17,18) est limité par une butée prévue sur la tige (6a,6b).

8. Dispositif selon la revendication 7, caractérisé en ce que, le tiroir (1) comprenant une tige (6) munie de pavés (P1,P2) coulissant dans un alésage (7) ménagé dans une chemise (8) afin d'obturer ou dégager des orifices (11) pour établir ou supprimer lesdites communications, l'une des butées est constituée par un jonc d'arrêt (19) et l'autre par un pavé d'extrémité (P1) du tiroir (1).

9. Dispositif selon la revendication 8, caractérisé en ce que la rondelle (18) située du côté du pavé (P1) a des dimensions suffisantes pour venir en butée contre la face d'extrémité correspondante de la chemise (8) dans laquelle coulisse le tiroir (1) lorsque le pavé (P1) pénètre dans l'alésage (7).

10. Dispositif selon l'une quelconque des revendications 8 et 9, caractérisé en ce qu'en position neutre du tiroir (1), la somme des jeux (Ja,Jb) entre les rondelles (18) situées du côté des pavés d'extrémité (P1,P2) et les faces correspondantes de la chemise (8) est inférieure ou égale à la course morte du tiroir (1).

11. Dispositif selon l'une quelconque des revendications 1 à 4, caractérisé en ce que les ressorts (R1,R2) sont du même côté du tiroir (1).

12. Dispositif selon la revendication 11, caractérisé en ce que les deux ressorts (R1,R2) sont montés sur une même tige (6b) prolongeant le tiroir (1) d'un côté de celui-ci et disposée colinéairement à ce tiroir (1), chaque ressort étant interposé entre deux rondelles (17,18) coulissant sur cette tige (6b).

13. Dispositif selon la revendication 12, caractérisé en ce que le mouvement de chaque rondelle (17,18) est limité par une butée prévue sur la tige (6b).

14. Dispositif selon la revendication 13, caractérisé en ce que, le tiroir (1) comprenant une tige (6) munie de pavés (P1,P2) coulissant dans un alésage (7) ménagé dans une chemise (8) afin d'obturer ou dégager des orifices (11) pour établir ou supprimer lesdites communications, les butées sont constituées, pour l'une des rondelles, par un pavé (P2) d'extrémité du tiroir (1) et, pour les autres, par des joncs d'arrêt (19) prévus sur la tige (6b).

15. Dispositif selon l'une quelconque des revendications 12 à 14, caractérisé en ce que les dimensions des rondelles sont telles qu'au cours des mouvements du tiroir (1), la plus proche dudit pavé (P2) puisse venir en butée contre la face d'extrémité correspondante de la chemise (8) dans laquelle coulisse le tiroir (1) et la plus éloignée contre une paroi (21) d'un corps (10) solidaire de la chemise (8).

16. Dispositif selon la revendication 15, caractérisé en ce que ladite paroi (21) présente un dégagement (20) dans lequel peut pénétrer l'extrémité correspondante de la tige (6b).

17. Dispositif selon l'une quelconque des revendications 15 et 16, caractérisé en ce qu'en position neutre du tiroir (1), la somme des jeux (Jb,Ja) entre ladite face de la chemise (8) et ladite paroi (21) et les rondelles correspondantes est inférieure ou égale à la course morte du tiroir (1).

## Claims

1. Device for transmitting power for mechanical control, comprising:
- a mechanical member such as a hydraulic slide valve (1) capable of establishing or otherwise communications between at least one use (U) and either a source of high-pressure (H), or a release (E);
- a rotary actuator or a rotary motor connected to the slide valve (1) by connection means so as to transmit a linear movement thereto; and
- means for returning the slide valve (1) to a predetermined safety position, comprising two springs or similar (R1, R2) acting on the slide valve in opposite directions,
characterised in that the springs (R1, R2) are prestressed independently of each other and separated from each other so that one (R1) alone exerts the return force when the slide valve (1) is displaced in one direction starting from said safety position and the other (R2) alone exerts the return force when the slide valve is displaced in the other direction starting from this position.

2. Device according to Claim 1, characterised in that the springs (R1, R2) have the same rigidity.

3. Device according to Claim 1, characterised in that the springs (R1, R2) have different rigidities.

4. Device according to any one of Claims 1 to 3, characterised in that said predetermined safety position is not an extreme position on the possible course of the slide valve and is preferably a position in which no communication is established.

5. Device according to any one of Claims 1 to 4, characterised in that the springs (R1, R2) are located on either side of the slide valve (1).

6. Device according to Claim 5, characterised in that each spring is interposed between two washers (17, 18) capable of sliding on a rod (6a, 6b) extending the slide valve (1) and arranged collinearly thereto.

7. Device according to Claim 6, characterised in that the movement of each washer (17, 18) is limited by a stop provided on the rod (6a, 6b).

8. Device according to Claim 7, characterised in that, the slide valve (1) comprising a rod (6) provided with blocks (P1, P2) sliding within a bore (7) made in a liner (8) in order to block or release orifices (11) so as to establish or eliminate said communications, one of the stops is constituted by a stop ring (19) and the other by an end block (P1) of the slide valve (1).

9. Device according to Claim 8, characterised in that the washer (18) located to the side of the block (P1) has sufficient dimensions to abut against the corresponding end face of the liner (8) inside which the slide valve (1) slides when the block (P1) penetrates into the bore (7).

10. Device according to any one of Claims 8 and 9, characterised in that, in the neutral position of the slide valve (1), the sum of the plays (Ja, Jb) between the washers (18) located to the side of the end blocks (P1, P2) and the corresponding faces of the linear (8) is less than or equal to the free travel of the slide valve (1).

11. Device according to any one of Claims 1 to 4, characterized in that the springs (R1, R2) are on the same side of the slide valve (1).

12. Device according to Claim 11, characterised in that both springs (R1, R2) are mounted on the same rod (6b) extending the slide valve (1) on one side thereof and arranged collinearly to that slide valve (1), each spring being interposed between two washers (17, 18) sliding on that rod (6b).

13. Device according to Claim 12, characterised in that the movement of each washer (17, 18) is limited by a stop provided on the rod (6b).

14. Device according to Claim 13, characterised in that, the slide valve (1) comprising a rod (6) provided with blocks (P1, P2) sliding within a bore (7) made in a liner (8) in order to block or release orifices (11) so as to establish or eliminate said communications, the stops are constituted, for one of the washers, by an end block (P2) of the slide valve (1) and, for the others, by stop rings (19) provided on the rod (6b).

15. Device according to any one of Claims 12 to 14, characterised in that the dimensions of the washers are such that, during the movements of the slide valve (1), the closest one to said block (P2) can abut against the corresponding end face of the liner (8) inside which the slide valve (1) slides and the furthest away against a wall (21) of a body (10) integral with the liner (8).

16. Device according to Claim 15, characterised in that said wall (21) has a clearance (20) into which the corresponding end of the rod (6b) can penetrate.

17. Device according to any one of Claims 15 and 16, characterised in that, in the neutral position of the slide valve (1), the sum of the plays (Jb, Ja) between said face of the liner (8) and said wall (21) and the corresponding washers is less than or equal to the free travel of the slide valve (1).

## Patentansprüche

1. Vorrichtung zum Übertragen von mechanischer Stellenergie mit:
- einer mechanischen Einrichtung, wie beispielsweise einem hydraulischen Schieber (1), der geeignet ist, Verbindungen zwischen wenigstens einer Anwendung (U) und entweder einer Hochdruckquelle (H) oder einem Auslaß (E) herzustellen oder nicht herzustellen;
- einem Drehantrieb oder einem Drehmotor, der mit dem Schieber (1) mittels Verbindungseinrichtungen verbunden ist, um auf ihn eine Linearbewegung zu übertragen; und
- Einrichtungen zum Zurückholen des Schiebers (1) in eine vorbestimmte Sicherheitsstellung mit zwei Federn oder ähnlichem (R1, R2), die auf den Schieber in entgegengesetzte Richtungen wirken,
dadurch gekennzeichnet, daß die Federn (R1, R2) unabhängig voneinander vorgespannt sind und die eine von der anderen derart getrennt ist, daß die eine (R1) die Rückholkraft allein ausübt, wenn der Schieber (1) sich in eine Richtung von der Sicherheitsstellung aus bewegt, und die andere (R2) die Rückholkraft allein ausübt, wenn der Schieber sich in die andere Richtung von dieser Sicherheitsstellung aus bewegt.

2. Vorrichtung nach Anspruch 1, dadurch gekennzeichnet, daß die Federn (R1, R2) die gleiche Steifigkeit haben.

3. Vorrichtung nach Anspruch 1, dadurch gekennzeichnet, daß die Federn (R1, R2) verschiedene Steifigkeiten haben.

4. Vorrichtung nach einem der Ansprüche 1 bis 3, dadurch gekennzeichnet, daß die vorbestimmte Sicherheitsstellung keine Extremstellung des möglichen Weges des Schiebers ist und vorzugsweise eine Stellung ist, in der keine Verbindung hergestellt ist.

5. Vorrichtung nach einem der Ansprüche 1 bis 4, dadurch gekennzeichnet, daß die Federn (R1, R2) beiderseits des Schiebers (1) angeordnet sind.

6. Vorrichtung nach Anspruch 5, dadurch gekennzeichnet, daß jede Feder zwischen zwei Scheiben (17, 18) zwischengefügt ist, die auf einer Stange (6a, 6b) gleiten können, die den Schieber (1) verlängert und kolinear zu ihm angeordnet ist.

7. Vorrichtung nach Anspruch 6, dadurch gekennzeichnet, daß die Bewegung von jeder Scheibe (17, 18) durch einen Anschlag begrenzt wird, der an der Stange (6a, 6b) vorgesehen ist.

8. Vorrichtung nach Anspruch 7, dadurch gekennzeichnet, daß der Schieber (1) eine Stange (6) aufweist, die mit Belägen (P1, P2) versehen ist, die in einer Bohrung (7) gleiten, die in einem Mantel (8) ausgespart ist, um Öffnungen (11) zu versperren oder freizugeben, um die Verbindungen herzustellen oder zu unterdrücken, wobei der eine der Anschläge von einem Sicherungsring (19) und der andere von einem Endbelag (P1) des Schiebers (1) gebildet wird.

9. Vorrichtung nach Anspruch 8, dadurch gekennzeichnet, daß die auf der Seite des Belages (P1) angeordnete Scheibe (18) Abmessungen aufweist, die ausreichen, um gegen die entsprechende Endfläche des Mantels (8) anzuschlagen, in der der Schieber (1) gleitet, wenn der Belag (P1) in die Bohrung (7) eindringt.

10. Vorrichtung nach einem der Ansprüche 8 oder 9, dadurch gekennzeichnet, daß in neutraler Stellung des Schiebers (1) die Summe der Spiele (Ja, Jb) zwischen den Scheiben (18), die seitlich der Endbeläge (P1, P2) angeordnet sind, und der entsprechenden Flächen des Mantels (8) kleiner oder gleich dem toten Gang des Schiebers (1) ist.

11. Vorrichtung nach einem der Ansprüche 1 bis 4, dadurch gekennzeichnet, daß die Federn (R1, R2) sich auf der gleichen Seite des Schiebers (1) befinden.

12. Vorrichtung nach Anspruch 11, dadurch gekennzeichnet, daß die zwei Federn (R1, R2) an einer gleichen Stange (6b) montiert sind, die den Schieber (1) an einer Seite von ihm verlängert und kolinear zu diesem Schieber (1) angeordnet ist, wobei jede Feder zwischen zwei Scheiben (17, 18) zwischengefügt ist, die auf dieser Stange (6b) gleiten.

13. Vorrichtung nach Anspruch 12, dadurch gekennzeichnet, daß die Bewegung von jeder Scheibe (17, 18) durch einen Anschlag begrenzt wird, der an der Stange (6b) vorgesehen ist.

14. Vorrichtung nach Anspruch 13, dadurch gekennzeichnet, daß der Schieber (1) eine Stange (6) aufweist, die mit Belägen (P1, P2) versehen sind, die in einer Bohrung (7) gleiten, die in einem Mantel (8) ausgespart ist, um Öffnungen (11) zu versperren oder freizugeben, um die Verbindungen herzustellen oder zu unterdrücken, wobei die Anschläge für die eine der Scheiben durch einen Endbelag (P2) des Schiebers (1) und für die anderen von Sicherungsringen (19) gebildet werden, die an der Stange (6b) vorgesehen sind.

15. Vorrichtung nach einem der Ansprüche 12 bis 14, dadurch gekennzeichnet, daß die Scheiben so bemessen sind, daß im Verlauf der Bewegungen des Schiebers (1) die, die dem Belag (P2) am nächsten ist, gegen die entsprechende Endfläche des Mantels (8), in dem der Schieber (1) gleitet, und die entfernteste gegen eine Wand (21) eines Körpers (10), der fest mit dem Mantel (8) verbunden ist, anschlagen kann.

16. Vorrichtung nach Anspruch 15, dadurch gekennzeichnet, daß die Wand (21) eine Ausnehmung (20) aufweist, in die das entsprechende Ende der Stange (6b) eindringen kann.

17. Vorrichtung nach Anspruch 15 oder 16, dadurch gekennzeichnet, daß in neutraler Stellung des Schiebers (1) die Summe der Spiele (Jb, Ja) zwischen besagter Fläche des Mantels (8) und besagter Wand (21) und den entsprechenden Scheiben kleiner oder gleich dem toten Gang des Schiebers (1) ist.
